# EUROPEAN PATENT APPLICATION

(11) **EP 3 412 925 A1**
(43) Date of publication of application: **12.12.2018**
(21) Application number: 17763210.6
(22) Date of filing: 07.03.2017
(51) Int. Cl.: F16D 3/74, B62D 5/04, F16D 3/50

(54) **JOINT FOR TORQUE TRANSMISSION, AND ELECTRIC POWER STEERING DEVICE**

(30) Priority: 08.03.2016 JP 2016044360
(71) Applicant: NSK Ltd., Tokyo 141-8560 (JP)
(72) Inventor: OOSAWA, Ryou, Maebashi-shi Gunma 371-8527 (JP)
(74) Representative: Naylor, Matthew John
(86) International application number: PCT/JP2017/008912
(87) International publication number: WO 2017/154870

(57) **Abstract**

The drive-side concave-convex part is engaged to the first coupling-side concave-convex part, and the drive-side concave-convex part is engaged to a part, which is located further toward one axial side than the partition wall part, of the third coupling-side concave-convex part in a state where a circumferential gap, which is greater than a circumferential gap provided to an engagement part between the drive-side concave-convex part and the first coupling-side concave-convex part, is interposed therebetween, The driven-side concave-convex part is engaged to the second coupling-side concave-convex part, and the driven-side concave-convex part is engaged to a part, which is located further toward the other axial side than the partition wall part, of the third coupling-side concave-convex part in a state where a circumferential gap, which is greater than a circumferential gap provided to an engagement part between the driven-side concave-convex part and the second coupling-side concave-convex part, is interposed therebetween. At least a part of the partition wall part is arranged between axial end faces of the drive-side transmission member and the driven-side transmission member.

## Description

### TECHNICAL FIELD

A torque-transmission joint of the present invention is to be incorporated into a variety of mechanical apparatuses and is to be used for transmitting torque between a drive shaft and a driven shaft, for example. An electric power steering device of the present invention is to be used as a steering device of an automobile and is configured to use an electric motor as an auxiliary power source, thereby reducing a force necessary for a driver to operate a steering wheel, for example.

### RELATED ART

When applying a steering angle to steered wheels (generally, front wheels except a special vehicle such as a forklift), a power steering device has been widely used as a device for reducing a force necessary for a driver to operate a steering wheel. Also, regarding the power steering device, an electric power steering device configured to use an electric motor as an auxiliary power source has also been recently spread. A variety of structures have been known as a structure of the electric power steering device. In any structure, auxiliary power of the electric motor is applied to a rotary shaft, which is configured to rotate in accordance with an operation of the steering wheel and to apply the steering angle to the steered wheels in association with the rotation, via a decelerator. As the decelerator, a worm decelerator is generally used. According to the electric power steering device using the worm decelerator, a worm configured to be rotatively driven by the electric motor and a worm wheel configured to rotate together with the rotary shaft are meshed with each other so that the auxiliary power of the electric motor can be transmitted to the rotary shaft. In the case of the worm decelerator, when reversing a rotating direction of the rotary shaft, an uncomfortable abnormal noise referred to as gear-tooth striking sound may be generated due to a backlash existing at the meshed part between the worm and the worm wheel, if any measures are not taken.

In order to suppress the gear-tooth striking sound, it has been considered to elastically press the worm towards the worm wheel by an elastic member such as a spring. FIGS. 23 and 24 depict an example of the electric power steering device disclosed in Patent Document 1. A steering wheel 1 is mounted to a rear end portion of a steering shaft 2. A front end portion of the steering shaft 2 is rotatably supported in a housing 3. A worm wheel 4 is fixed to a part that is to be rotatively driven by the steering shaft 2. Worm teeth 5 configured to mesh with the worm wheel 4 are provided on an axially intermediate part of a worm shaft 6. Both axial end portions of a worm 8 configured to be rotatively driven by an electric motor 7 are rotatably supported in the housing 3 by a pair of rolling bearings 9a, 9b such as deep groove ball bearings. A pressing piece 10 is externally fitted to a leading end portion of the worm shaft 6, which protrudes beyond the rolling bearing 9a. An elastic member such as a coil spring 11 is provided between the pressing piece 10 and the housing 3. By the coil spring 11, the worm teeth 5 of the worm shaft 6 are pressed towards the worm wheel 4 via the pressing piece 10. By this configuration, the backlash between the worm teeth 5 and the worm wheel 4 is suppressed, so that the gear-tooth striking sound is suppressed.

According to the above structure of the related art, it is possible to suppress the gear-tooth striking sound from being generated at the meshed part between the worm teeth 5 and the worm wheel 4. However, it is not possible to suppress an abnormal noise, which is to be generated at a joined part between a leading end portion of an output shaft 12 of the electric motor 7 and a base end portion of the worm shaft 6. This situation is described as follows. In the shown structure, in order to join the leading end portion of the output shaft 12 of the electric motor 7 and the base end portion of the worm shaft 6 so that torque can be transmitted, the base end portion of the worm shaft 6 is formed with an opened spline hole 13. In the meantime, the leading end portion of the output shaft 12 is formed with a spline shaft part 14. The spline shaft part 14 and the spline hole 13 are spline-engaged, so that the output shaft 12 and the worm shaft 6 are joined so that the torque can be transmitted.

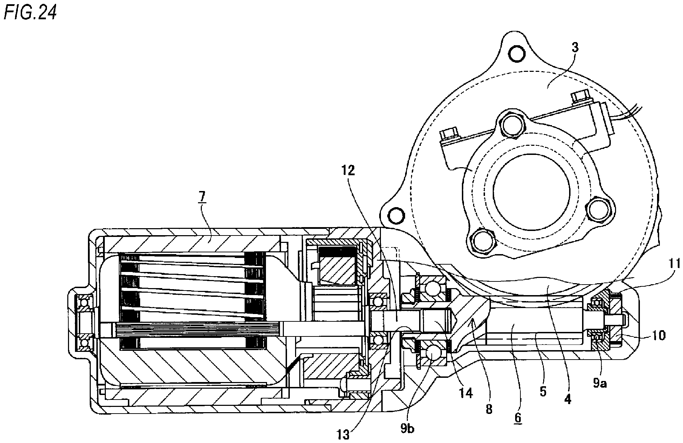

When the spline shaft part 14 and the spline hole 13 are spline-engaged without a circumferential gap (without the backlash), the abnormal noise does not occur at the joined part (the spline engagement part) between the leading end portion of the output shaft 12 and the base end portion of the worm shaft 6. However, the backlash actually exists at the spline engagement part. In particular, according to the structure where the backlash between the worm teeth 5 and the worm wheel 4 is suppressed by the structure shown in FIG. 24, since it is necessary to cause the worm shaft 6 to oscillate and be displaced, it is not possible to completely remove the backlash of the spline engagement part, so that it is difficult to prevent the abnormal noise.

Patent Document 2 discloses a structure where the output shaft of the electric motor and the worm shaft are joined via a metallic cylindrical power transmission member for smooth oscillation and displacement of the worm shaft. Also in the structure of Patent Document 2, in order to cause the worm shaft to oscillate and be displaced, the backlashes exist at the spline engagement parts between the spline shaft parts (male splines) provided at both end portions of the power transmission member and the spline holes (female splines) provided at respective end portions of the worm shaft and the output shaft of the electric motor, respectively. For this reason, the abnormal noise may be generated when reversing a rotating direction of the rotary shaft.

### Citation List

### Patent Documents

Patent Document 1: JP-A-2004-306898
Patent Document 2: JP-A-2012-131249

### SUMMARY OF THE INVENTION

### Problems To Be Solved by the Invention

The present invention has been made in view of the above situations, and an object of the present invention is to implement a structure of a torque-transmission joint capable of suppressing an abnormal noise when reversing a rotating direction of a drive shaft.

### Means For Solving the Problems

A torque-transmission joint is configured to transmit torque between end portions of a drive shaft and a driven shaft disposed in series in an axial direction, and includes a drive-side transmission member, a driven-side transmission member, and a coupling.

The drive-side transmission member is supported to an end portion of the drive shaft, and has a drive-side concave-convex part configured by concave parts and convex parts arranged on an outer peripheral surface.

Also, the driven-side transmission member is supported to an end portion of the driven shaft and has a driven-side concave-convex part configured by concave parts and convex parts arranged on an outer peripheral surface.

Also, the coupling is configured by combining a high-stiffness body and a low-stiffness body having stiffness lower than the high-stiffness body, and has a first coupling-side concave-convex part configured by concave parts and convex parts arranged at one axial end portion of an inner peripheral surface, a second coupling-side concave-convex part configured by concave parts and convex parts arranged at the other axial end portion of the inner peripheral surface, a third coupling-side concave-convex part configured by concave parts and convex parts alternately arranged at an axially intermediate part of the inner peripheral surface, and a partition wall part joined to an axially intermediate portion of the third coupling-side concave-convex part, at least the third coupling-side concave-convex part is formed at the high-stiffness body, and concave parts configuring the first coupling-side concave-convex part and the second coupling-side concave-convex part are formed at the low-stiffness body. In the meantime, the partition wall part may be formed at any one of the high-stiffness body and the low-stiffness body.

Also, the drive-side concave-convex part is engaged with the first coupling-side concave-convex part, and the drive-side concave-convex part is engaged to a part, which is located further toward one axial side than the partition wall part, of the third coupling-side concave-convex part in a state where a circumferential gap, which is greater than a circumferential gap (including a zero gap) provided to an engagement part between the drive-side concave-convex part and the first coupling-side concave-convex part (provided between circumferential side surfaces of convex parts configuring the drive-side concave-convex part and convex parts configuring the first coupling-side concave-convex part), is interposed therebetween (a state where the circumferential gap is provided between circumferential side surfaces of the convex parts configuring the drive-side concave-convex part and convex parts configuring the third coupling-side concave-convex part of the one axial side).

Also, the driven-side concave-convex part is engaged to the second coupling-side concave-convex part, and the driven-side concave-convex part is engaged to a part, which is located further toward the other axial side than the partition wall part, of the third coupling-side concave-convex part in a state where a circumferential gap, which is greater than a circumferential gap (including a zero gap) provided to an engagement part between the driven-side concave-convex part and the second coupling-side concave-convex part (provided between circumferential side surfaces of convex parts configuring the driven-side concave-convex part and convex parts configuring the second coupling-side concave-convex part), is interposed therebetween (a state where the circumferential gap is provided between circumferential side surfaces of the convex parts configuring the driven-side concave-convex part and convex parts configuring the third coupling-side concave-convex part of the other axial side).

Also, at least a part of the partition wall part is arranged between axial end faces of the drive-side transmission member and the driven-side transmission member.

When implementing the torque-transmission joint, for example, the high-stiffness body may have a main part having the third coupling-side concave-convex part and the partition wall part provided on an inner peripheral surface thereof, and a pair of sub-parts provided at positions at which the main part is sandwiched from both axial sides. Also, the low-stiffness body may have a drive-side low-stiffness body and a driven-side low-stiffness body. The drive-side low-stiffness body may have the concave parts configuring the first coupling-side concave-convex part at a plurality of circumferential places on an inner peripheral surface thereof, and may be joined to the sub-part of one axial side of the pair of sub-parts. The driven-side low-stiffness body may have the concave parts configuring the second coupling-side concave-convex part at a plurality of circumferential places on an inner peripheral surface thereof, and may be joined to the sub-part of the other axial side of the pair of sub-parts.

When implementing the torque-transmission joint, for example, a radially inner side of the partition wall part may be formed with a support hole, and a preload member made of an elastic material for applying an axial preload to the driven shaft in a use state may be internally fitted and supported to the support hole.

When implementing the torque-transmission joint, for example, a radial gap may be interposed in at least one engagement part of an engagement part between the drive-side concave-convex part and a part, which is located further toward one axial side than the partition wall part, of the first coupling-side concave-convex part and the third coupling-side concave-convex part and an engagement part between the driven-side concave-convex part and a part, which is located further toward the other axial side than the partition wall part, of the second coupling-side concave-convex part and the third coupling-side concave-convex part (radial gaps may be respectively provided between a radially outer end face of a convex part configuring a radially inner concave-convex part of a pair of concave-convex parts to be engaged with each other and a bottom surface of a concave part configuring a radially outer concave-convex part and between a bottom surface of a concave part configuring the radially inner concave-convex part and a radially inner end face of a convex part configuring the radially outer concave-convex).

When implementing the torque-transmission joint, for example, the partition wall part may be formed to extend radially inward from ab axially intermediate part of an inner peripheral surface of the third coupling-side concave-convex part, parts, which are located at both axial sides with the partition wall part being interposed therebetween, of concave parts configuring the third coupling-side concave-convex part are formed to be connected with each other by through-holes formed at a plurality of circumferential places on the partition wall part, and a diameter of an inscribed circle of the respective through-holes may be smaller than a diameter of an inscribed circle (tooth tip circle) of the convex parts configuring the third coupling-side concave-convex part.

When implementing the torque-transmission joint, for example, guide concave parts, which are concave in the axial direction, may be provided at at least one portions of portions corresponding to one axial end opening peripheral edge portions of the concave parts configuring the first coupling-side concave-convex part at a plurality of circumferential places on one axial side surface of the coupling and portions corresponding to the other axial end opening peripheral edge portions of the concave parts configuring the second coupling-side concave-convex part at a plurality of circumferential places on the other axial side surface of the coupling.

When implementing the torque-transmission joint, for example, a circumferential width dimension of each convex part configuring at least one of the drive-side concave-convex part and the driven-side concave-convex part may vary (without being constant) in the axial direction.

In this case, for example, a configuration where the circumferential width dimension of the convex part decreases toward the partition wall part with respect to the axial direction may be adopted.

Also, for example, the circumferential width dimension of the convex part may decrease from an axially intermediate part toward both end edge portions.

An electric power steering device includes a housing, a rotary shaft, a worm wheel, a worm, and an electric motor.

The rotary shaft is rotatably supported to the housing.

Also, the worm wheel is coaxially supported to the rotary shaft and is configured to rotate together with the rotary shaft.

Also, the worm has worm teeth provided on an axially intermediate part of a worm shaft, and both axial end portions of the worm shaft are rotatably supported to the housing by bearings with the worm teeth being meshed with the worm wheel.

Also, the electric motor is configured to rotatively drive the worm with being supported to the housing, for example.

An output shaft of the electric motor, which is a drive shaft, and the worm shaft, which is a driven shaft, are connected to each other by a torque-transmission joint so that torque can be transmitted.

In the electric power steering device, the above-described torque-transmission joint may be applied.

When implementing the electric power steering device, for example, a preload applying mechanism configured to elastically press the worm toward the worm wheel may be provided between a leading end portion of the worm shaft (an end portion opposite to a side joined to the output shaft of the electric motor via the torque-transmission joint) and the housing.

### Effects of the Invention

According to the torque-transmission joint and the electric power steering device configured as described above, it is possible to suppress an abnormal sound when reversing a rotating direction of the drive shaft.

That is, when the torque that is to be transmitted between the drive shaft and the driven shaft is small and an amount of circumferential elastic deformation of the low-stiffness body is small, the circumferential side surfaces of the convex parts configuring the drive-side concave-convex part and driven-side concave-convex part are not in contact with the circumferential side surfaces of the convex parts configuring the pair of third coupling-side concave-convex parts (high-stiffness body). Accordingly, it is possible to suppress the abnormal sound even when reversing the rotating direction of the drive shaft. Meanwhile, in this state, the torque is transmitted from the drive-side transmission member to the coupling via the engagement part between the drive-side concave-convex part and the first coupling-side concave-convex part (low-stiffness body), and the torque transmitted to the coupling is transmitted to the driven-side transmission member via the engagement part between the second coupling-side concave-convex part (low-stiffness body) and the driven-side concave-convex part.

Also, when the torque that is to be transmitted between the drive shaft and the driven shaft is large, the amount of circumferential elastic deformation of the low-stiffness body increases and the circumferential side surfaces of the convex parts configuring the drive-side concave-convex part and driven-side concave-convex part are in contact with the circumferential side surfaces of the convex parts configuring the pair of third coupling-side concave-convex parts (high-stiffness body). Since the force of the contact is lowered in association with the circumferential elastic deformation of the low-stiffness body, it is possible to suppress the abnormal sound accompanied by the contact. Accordingly, even though the torque increases when reversing the rotating direction of the drive shaft, it is possible to suppress the abnormal sound. Meanwhile, in this state, most of the torque is transmitted from the drive-side transmission member to the coupling via the engagement part between the drive-side concave-convex part and the third coupling-side concave-convex part of one axial side, and most of the torque transmitted to the coupling is transmitted to the driven-side transmission member via the engagement part between the third coupling-side concave-convex part (high-stiffness body) of the other axial side and the driven-side concave-convex part.

Also, the partition wall part is provided, so that it is possible to restrain an axial position of the coupling relative to the drive-side transmission member and the driven-side transmission member.

### BRIEF DESCRIPTION OF THE DRAWINGS

FIG. 1 is a view similar to FIG. 24, depicting a first example of an embodiment.
FIG. 2 is a perspective view of a torque-transmission joint.
FIG. 3 is an exploded perspective view of the torque-transmission joint.
FIG. 4 is an enlarged view of an A part of FIG. 1.
FIG. 5 is a sectional view taken along a line B-B of FIG. 4 (a sectional view taken along a line D-D).
FIG. 6 is a sectional view taken along a line C-C of FIG. 4 (a sectional view taken along a line E-E).
FIGS. 7A and 7B depict a drive-side transmission member, in which FIG. 7A is a sectional view taken along a line F-F of FIG. 7B, and FIG. 7B is a view, as seen from the right of FIG. 7A.
FIGS. 8A and 8B depict a driven-side transmission member, in which FIG. 8A is a view seen from the left of FIG. 8B, and FG. 8B is a sectional view taken along a line G-G of FIG. 8A.
FIG. 9A to 9C depict three examples of a convex part configuring a drive-side concave-convex part (driven-side concave-convex part), as seen from a radially outer side.
FIG. 10 depicts a high-stiffness body, as seen from an axial direction.
FIG. 11A is a sectional view taken along a line H-H of FIG. 10, and FIG. 11B is a sectional view taken along a line I-I of FIG. 10.
FIG. 12 depicts a drive-side low-stiffness body (driven-side low-stiffness body), as seen from the axial direction.
FIG. 13A is a sectional view taken along a line J-J of FIG. 12, and FIG. 13B is a sectional view taken along a line K-K of FIG. 12.
FIG. 14A depicts a preload member, as seen from the axial direction, and FIG. 14B is a view, as seen from the right of FIG. 14A.
FIG. 15 is a perspective view of a torque-transmission joint, depicting a second example of the embodiment.
FIG. 16 is an exploded perspective view of the torque-transmission joint.
FIG. 17 is an enlarged view equivalent to the A part of FIG. 1.
FIG. 18 depicts the torque-transmission joint, as seen from one axial side.
FIGS. 19A and 19B depict a drive-side transmission member, in which FIG. 19A is a view, as seen from the left of FIG. 19B and FIG. 19B is a sectional view taken along a line L-L of FIG. 19A.
FIGS. 20A and 20B depict a driven-side transmission member, in which FIG. 20A is a sectional view taken along a line M-M of FIG. 20B, and FIG. 20B is a view, as seen from the right of FIG. 20A.
FIG. 21 depicts a third example of the embodiment, as seen from the axial direction of the high-stiffness body.
FIG. 22A is a sectional view taken along a line N-N of FIG. 21, and FIG. 22B is a sectional view taken along a line O-O of FIG. 21.
FIG. 23 is a partially cut side view depicting an example of the conventional structure of an electric power steering device.
FIG. 24 is an enlarged sectional view taken along a line P-P of FIG. 23.

### DETAILED DESCRIPTION OF EMBODIMENTS

### [First Example of Embodiment]

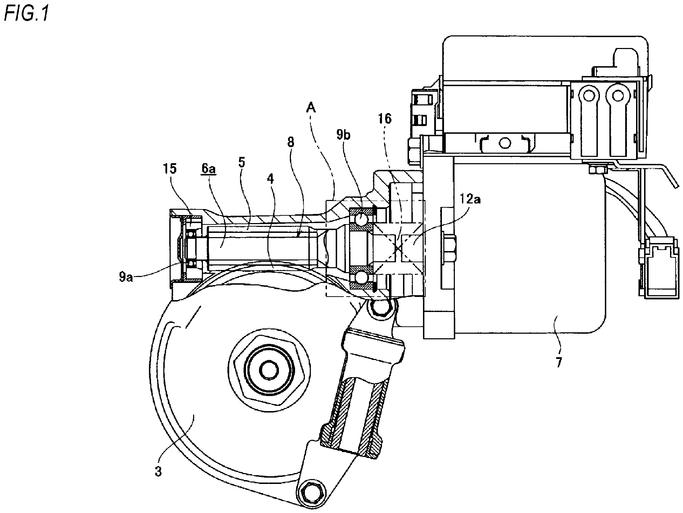

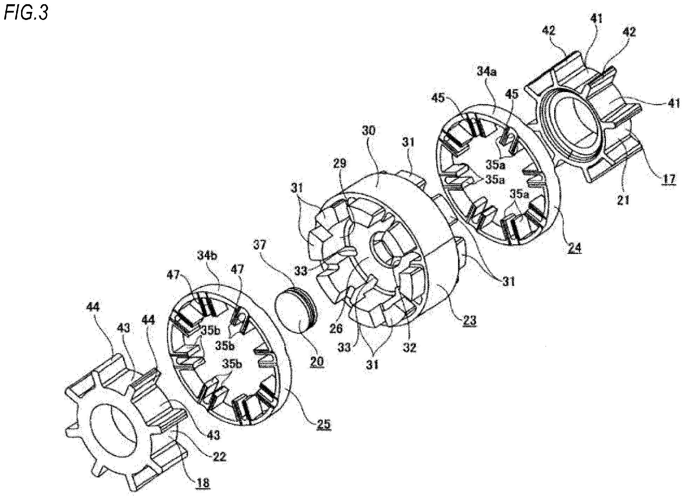

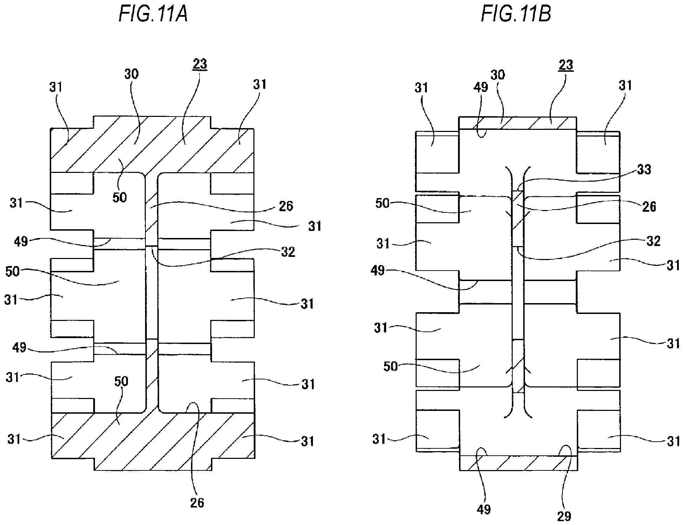

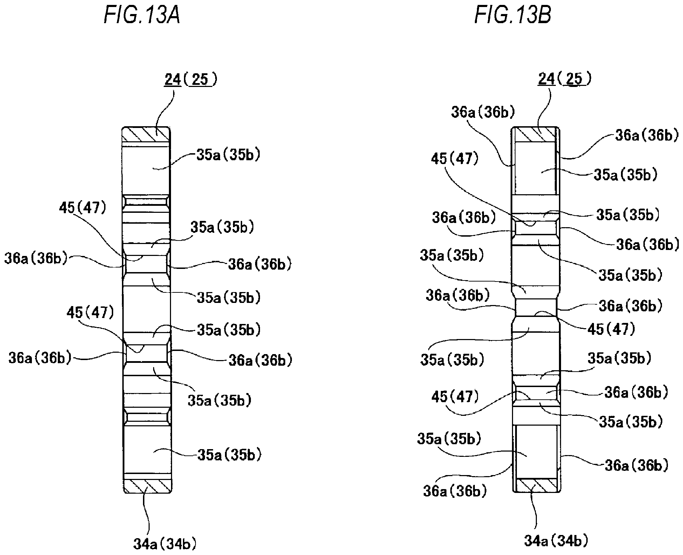

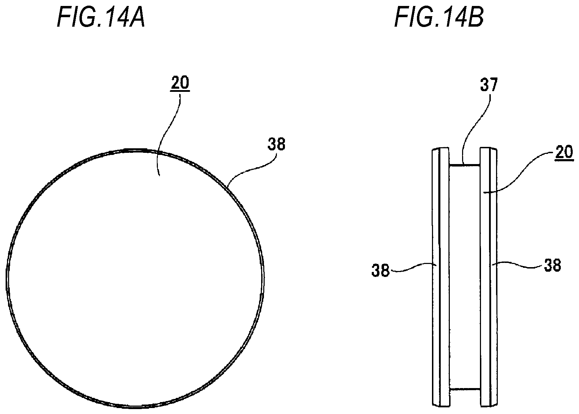

A first example of an embodiment of the present invention will be described with reference to FIGS. 1 to 14.

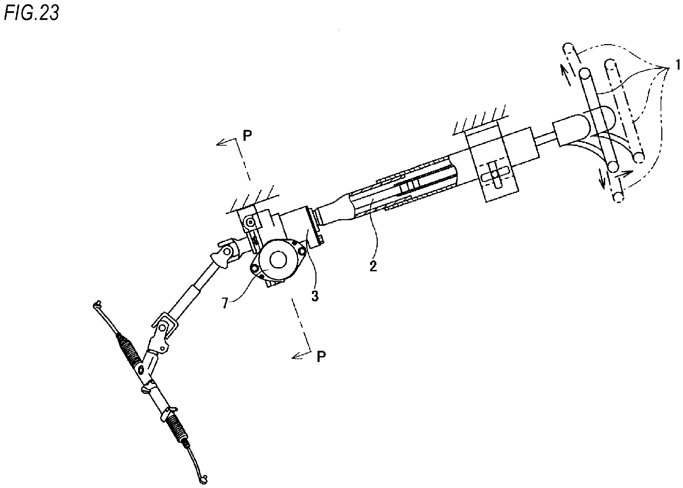

Like the conventional structure shown in FIGS. 23 and 24, in an electric power steering device of the first example, a steering wheel 1 is mounted to a rear end portion of a steering shaft 2, a front end portion of the steering shaft 2 is rotatably supported in a housing 3, and a worm wheel 4 is fixed to a part that is to be rotatively driven by the steering shaft 2. Worm teeth 5 configured to mesh with the worm wheel 4 are provided on an axially intermediate part of a worm shaft 6a. Both axial end portions of a worm 8 configured to be rotatively driven by an electric motor 7 are rotatably supported in the housing 3 by a pair of rolling bearings (ball bearings, in the shown example) 9a, 9b. Also, a preload applying mechanism 15 is provided between the rolling bearing 9a externally fitted to a leading end portion of the worm shaft 6a and the housing 3, so that the worm teeth 5 provided on the worm shaft 6a are pressed toward the worm wheel 4. By this configuration, a backlash between the worm teeth 5 and the worm wheel 4 is suppressed, so that a gear-tooth striking sound is suppressed.

In the first example, a leading end portion of an output shaft 12a of the electric motor 7, which corresponds to the drive shaft of the claims, and a base end portion of the worm shaft 6a, which corresponds to the driven shaft of the claims, are joined so that torque can be transmitted via a torque-transmission joint 16.

The torque-transmission joint 16 includes a drive-side transmission member 17, a driven-side transmission member 18, a coupling 19, and a preload member 20.

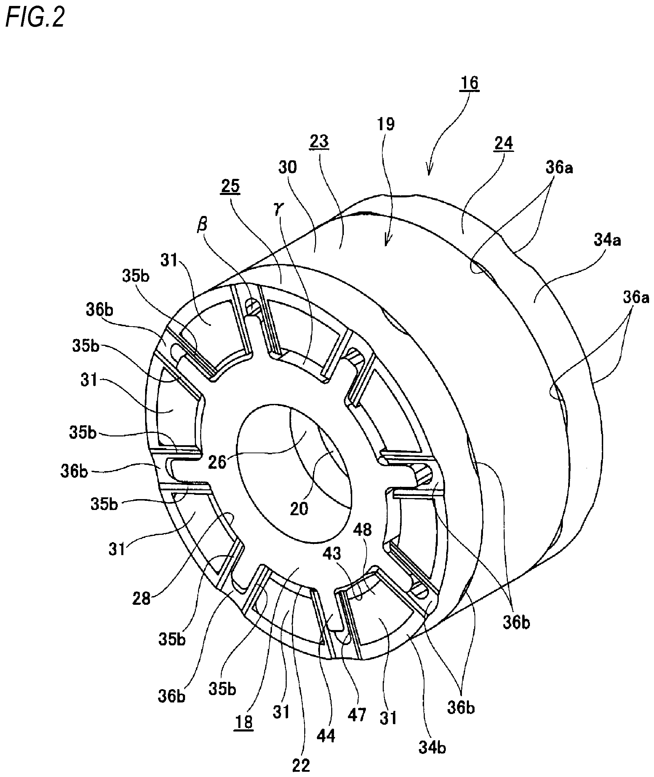

Meanwhile, in the specification and the claims, regarding the torque-transmission joint 16, "one axial side" refers to a right side in FIGS. 2 to 4, and "the other axial side" refers to a left side of FIGS. 2 to 4.

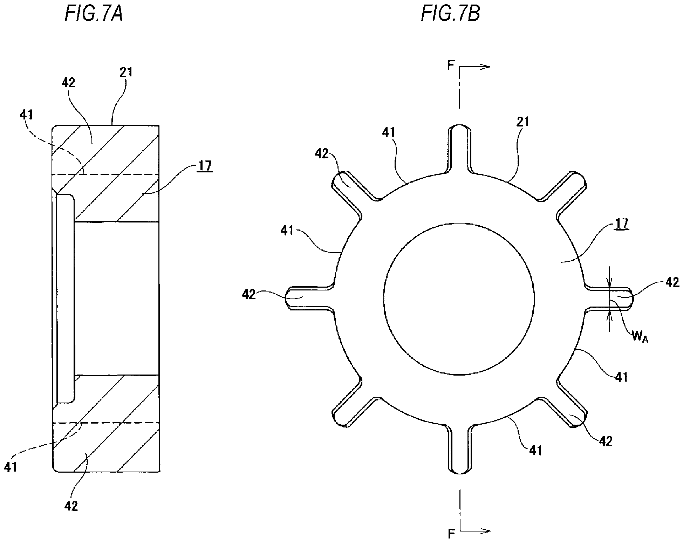

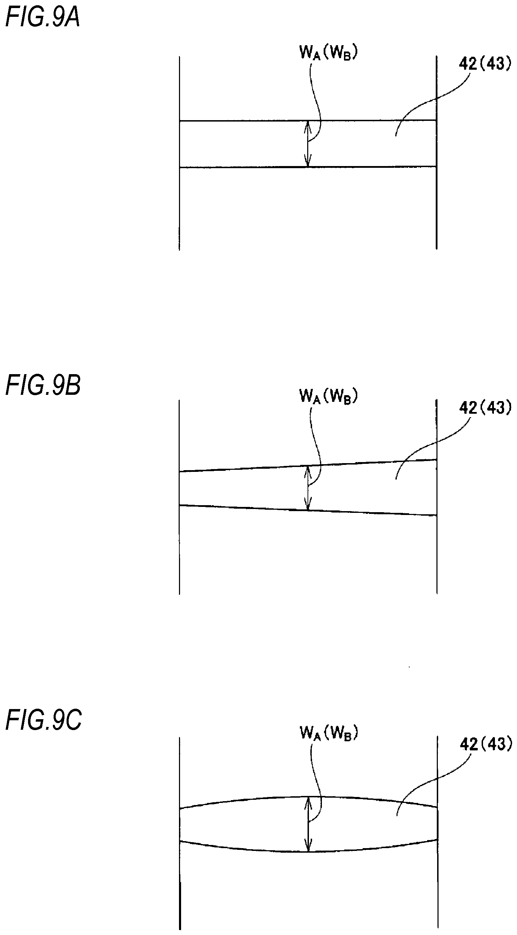

The drive-side transmission member 17 has a circular ring shape as a whole, and is externally fitted and fixed (supported so that torque can be transmitted) to the leading end portion of the output shaft 12a with relative rotation and axial relative displacement being held back by interference fitting, spline fitting, swaging or the like. An outer peripheral surface of the drive-side transmission member 17 is provided with a drive-side concave-convex part 21 configured by concave parts 41 and convex parts 42 alternately arranged in a circumferential direction. In the first example, a circumferential width dimension W_{A} (refer to FIG. 7B) of the convex part 42 does not change in a radial direction, and does not also change in an axial direction, as shown in FIG. 9A. The drive-side transmission member 17 is made of synthetic resin in which reinforced fibers are mixed, as necessary, or metal such as iron alloy, copper alloy and aluminum alloy (cast product, forged product, sintered metal product and the like).

The driven-side transmission member 18 has a circular ring shape as a whole, and is externally fitted and fixed (supported so that torque can be transmitted) to the base end portion of the worm shaft 6a with relative rotation and axial relative displacement being held back by interference fitting, spline fitting, swaging or the like. An outer peripheral surface of the driven-side transmission member 18 is provided with a driven-side concave-convex part 22 configured by concave parts 43 and convex parts 44 alternately arranged in a circumferential direction. In the first example, a circumferential width dimension W_{B} (refer to FIG. 9A) of the convex part 44 does not change in the radial direction, and does not also change in the axial direction, as shown in FIG. 9A. The driven-side transmission member 18 is made of synthetic resin in which reinforced fibers are mixed, as necessary, or metal such as iron alloy, copper alloy and aluminum alloy (cast product, forged product, sintered metal product and the like).

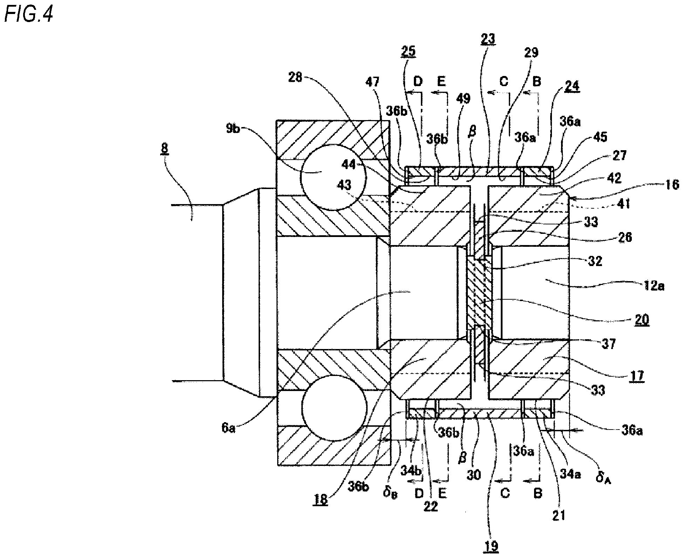

In the first example, the drive-side transmission member 17 and the driven-side transmission member 18 are made to have the same shape and dimension, and axial directions thereof are opposite to each other in an assembled state of FIG. 4. For this reason, in the first example, the components can be commonly used for the drive-side transmission member 17 and the driven-side transmission member 18.

The coupling 19 is formed to have a cylindrical shape by a combination of a high-stiffness body 23, a drive-side low-stiffness body 24, which is a low-stiffness body, and a driven-side low-stiffness body 25, which is a low-stiffness body. Specifically, the drive-side low-stiffness body 24 is joined (externally fitted) to one axial end portion of the high-stiffness body 23, and the driven-side low-stiffness body 25 is joined (externally fitted) to the other axial end portion of the high-stiffness body 23.

The coupling 19 has a first coupling-side concave-convex part 27, a second coupling-side concave-convex part 28, a third coupling-side concave-convex part 29, and a partition wall part 26. The first coupling-side concave-convex part 27 is configured by concave parts 45 and convex parts 46 alternately arranged in the circumferential direction at one axial end portion of an inner peripheral surface of the coupling 19. The second coupling-side concave-convex part 28 is configured by concave parts 47 and convex parts 48 alternately arranged in the circumferential direction at the other axial end portion of the inner peripheral surface of the coupling 19. The third coupling-side concave-convex part 29 is configured by concave parts 49 and convex parts 50 alternately arranged in the circumferential direction at an axially intermediate part of the inner peripheral surface of the coupling 19. The partition wall part 26 is joined to an axially central part of the third coupling-side concave-convex part 29.

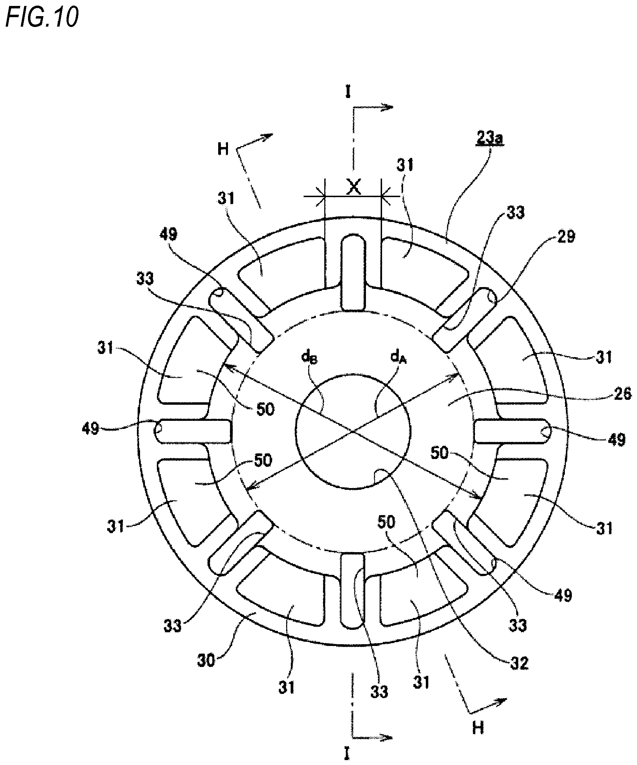

The high-stiffness body 23 has a circular ring shape as a whole, and both axial half parts thereof are symmetric with respect to the axial direction. The high-stiffness body 23 has a main part 30, a plurality of core parts 31, 31, the third coupling-side concave-convex part 29 and the partition wall part 26. The main part 30 has a cylindrical shape. The core parts 31, 31 protrude axially from a plurality of places equidistantly spaced in a circumferential direction on both axial side surfaces of the main part 30, and have a fan shape, respectively, as seen from the axial direction. The third coupling-side concave-convex part 29 is configured by the concave parts 49 and the convex parts 50 alternately arranged in the circumferential direction on an inner peripheral surface of the main part 30. The partition wall part 26 extends radially inward from an axially central part of an inner peripheral surface of the third coupling-side concave-convex part 29. Meanwhile, in the first example, an aggregate of the respective core parts 31, 31 provided at one axial side of the main part 30 and an aggregate of the respective core parts 31, 31 provided at the other axial side of the main part 30 correspond to the sub-parts defined in the claims, respectively. Also, the partition wall part 26 has a circular ring shape and is formed at a radially inner side (radially central part) with a circular support hole 32. Also, a radially outer half part of the partition wall part 26 is formed with through-holes 33, 33 having a substantially rectangular (elliptical) shape, which is long in the radial direction, at a plurality of places in alignment with the respective concave parts 49, 49, which configure the third coupling-side concave-convex part 29, with respect to the circumferential direction. Parts, which are located at both axial sides with the partition wall part being interposed therebetween, of the respective concave parts 49, 49 are formed to be connected with each other by the respective through-holes 33, 33. That is, the respective concave parts 49, 49 continuously extend over an entire length while longitudinally central portions thereof are not partitioned by the partition wall part 26. Also, a diameter d_{A} of an inscribed circle of the respective through-holes 33, 33 is smaller than a diameter d_{B} of an inscribed circle (an inscribed circle of the respective core parts 31, 31) of the convex parts 50, 50 (d_{A}<d_{B}, refer to FIG. 10). The high-stiffness body 23 is made of a material, which is more difficult to be elastically deformed (has higher stiffness) than an elastic material such as rubber-like elastomer configuring the drive-side low-stiffness body 24 and the driven-side low-stiffness body 25. As the material of the high-stiffness body 23, an elastic material such as rubber-like elastomer satisfying the above condition, a synthetic resin in which reinforced fibers are mixed, as necessary, and metal such as iron alloy, copper alloy, aluminum alloy, sintered metal and the like may be exemplified. In the meantime, when implementing the present invention, the respective through-holes 33, 33 may be omitted (the respective through-holes 33, 33 are blocked) to partition the longitudinally (axially) central portions of the respective concave parts 49, 49 by the partition wall part 26.

The drive-side low-stiffness body 24 is made of an elastic material such as rubber-like elastomer having stiffness lower than the high-stiffness body 23, and has a circular ring shape as a whole, and both axial half parts thereof are symmetric with respect to the axial direction. The drive-side low-stiffness body 24 has a coupling cylinder part 34a having a short cylinder shape and a plurality of pairs of flat plate-shaped clamped pieces 35a, 35a extending radially inward and in parallel with each other from a plurality of places equidistantly spaced in the circumferential direction on an inner peripheral surface of the coupling cylinder part 34a. In the first example, a part of which three surfaces are surrounded by each pair of the clamped pieces 35a, 35a and the coupling cylinder part 34a is the concave part 45 configuring the first coupling-side concave-convex part 27. That is, the drive-side low-stiffness body 24 has the concave parts 45 provided at the plurality of circumferential places on the inner peripheral surface. Also, guide concave parts 36a, 36a, which are concave in the axial direction, are provided at portions corresponding to both axial end opening peripheral edge portions of the concave parts 45 at the plurality of circumferential places on both axial end faces of the drive-side low-stiffness body 24. An inner surface shape of each of the guide concave parts 36a, 36a is not limited to a partially cylindrical concave surface extending in the radial direction, as shown. For example, the inner surface may have a concave surface shape extending radially and having a rectangular section (as seen from the radial direction).

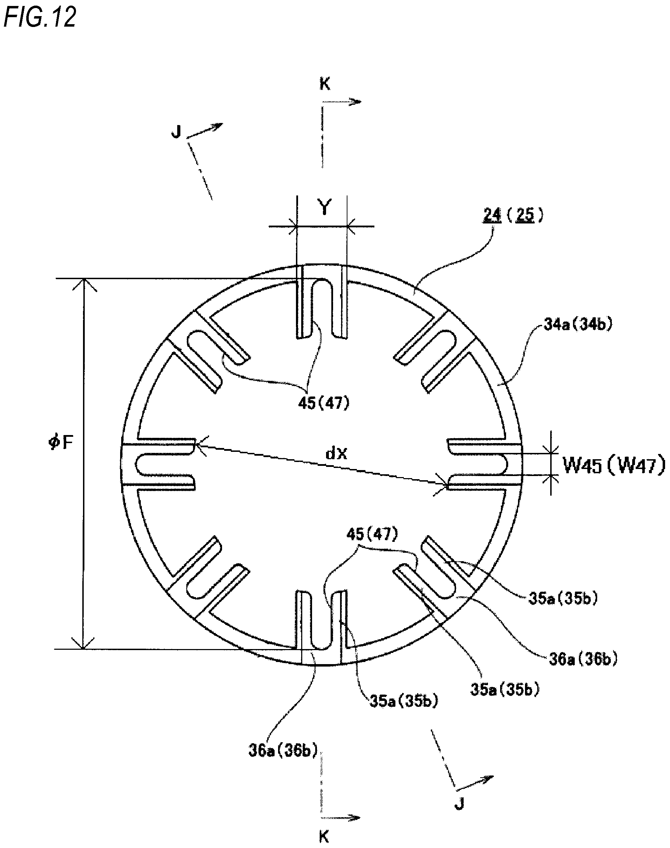

Each of the core parts 31, 31 provided at one axial end portion of the high-stiffness body 23 is inserted one by one into an inner side of a part of which three surfaces are surrounded by the two clamped pieces 35a, 35a, which are adjacent to each other in the circumferential direction and have a circumferential gap therebetween gradually decreasing toward the radially inner side, and the coupling cylinder part 34a of the drive-side low-stiffness body 24 configured as described above, without circumferential and radial rattling. The other axial end face of the coupling cylinder part 34a of the drive-side low-stiffness body 24 is contacted to one axial end face of the main part 30 of the high-stiffness body 23. In this state, the drive-side low-stiffness body 24 is joined and fixed to the high-stiffness body 23 by adhesion or the like. In the first example, in this state, a combination of each of the core parts 31, 31 provided at one axial end portion of the high-stiffness body 23 and the pair of clamped pieces 35a, 35a adjacent to both circumferential sides of each of the core parts 31, 31 is the convex part 46 configuring the first coupling-side concave-convex part 27. In the meantime, a circumferential distance X (refer to FIG. 10) between the core parts 31, 31 adjacent to each other in the circumferential direction is preferably equal to or smaller than a circumferential distance Y (refer to FIG. 12) between circumferentially outer surfaces of the pair of clamped pieces 35a, 35a 31 adjacent to each other in the circumferential direction (X≤Y).

The driven-side low-stiffness body 25 is made of an elastic material such as rubber-like elastomer having stiffness lower than the high-stiffness body 23, and has a circular ring shape as a whole, and both axial half parts thereof are symmetric with respect to the axial direction. The driven-side low-stiffness body 25 has a coupling cylinder part 34b having a short cylinder shape and a plurality of pairs of flat plate-shaped clamped pieces 35b, 35b extending radially inward and in parallel with each other from a plurality of places equidistantly spaced in the circumferential direction on an inner peripheral surface of the coupling cylinder part 34b. In the first example, a part of which three surfaces are surrounded by each pair of the clamped pieces 35b, 35b and the coupling cylinder part 34b is the concave part 47 configuring the second coupling-side concave-convex part 28. That is, the driven-side low-stiffness body 25 has the concave parts 47 provided at the plurality of circumferential places on the inner peripheral surface. Also, guide concave parts 36b, 36b, which are concave in the axial direction, are provided at portions corresponding to both axial end opening peripheral edge portions of the concave parts 47 at the plurality of circumferential places on both axial end faces of the driven-side low-stiffness body 25. An inner surface shape of each of the guide concave parts 36b, 36b is not limited to a partially cylindrical concave surface extending in the radial direction, as shown. For example, the inner surface may have a concave surface shape extending radially and having a rectangular section (as seen from the radial direction).

Each of the core parts 31, 31 provided at the other axial end portion of the high-stiffness body 23 is inserted one by one into an inner side of a part of which three surfaces are surrounded by the two clamped pieces 35b, 35b, which are adjacent to each other in the circumferential direction and have a circumferential gap therebetween gradually decreasing toward the radially inner side, and the coupling cylinder part 34b of the driven-side low-stiffness body 25 configured as described above, without circumferential and radial rattling. One axial end face of the coupling cylinder part 34b of the driven-side low-stiffness body 25 is contacted to the other axial end face of the main part 30 of the high-stiffness body 23. In this state, the driven-side low-stiffness body 25 is joined and fixed to the high-stiffness body 23 by adhesion or the like. In the first example, in this state, a combination of each of the core parts 31, 31 provided at the other axial end portion of the high-stiffness body 23 and the pair of clamped pieces 35b, 35b adjacent to both circumferential sides of each of the core parts 31, 31 is the convex part 48 configuring the second coupling-side concave-convex part 28. In the meantime, the circumferential distance X (refer to FIG. 10) between the core parts 31, 31 adjacent to each other in the circumferential direction is preferably equal to or smaller than the circumferential distance Y (refer to FIG. 12) between the circumferentially outer surfaces of the pair of clamped pieces 35a, 35a 31 adjacent to each other in the circumferential direction (X≤Y).

In the first example, the drive-side low-stiffness body 24 and the driven-side low-stiffness body 25 are made to have the same shape and dimension. For this reason, in the first example, the components can be commonly used for the drive-side low-stiffness body 24 and the driven-side low-stiffness body 25.

As clearly seen from the above description, in the first example, the third coupling-side concave-convex part 29 and the partition wall part 26 are formed at the high-stiffness body 23 of the coupling 19, the concave parts 45 configuring the first coupling-side concave-convex part 27 are formed at the drive-side low-stiffness body 24 of the coupling 19, and the concave parts 47 configuring the second coupling-side concave-convex part 28 are formed at the driven-side low-stiffness body 25 of the coupling 19. Also, the guide concave parts 36a, 36a are provided at the portions corresponding to one axial end opening peripheral edge portions of the concave parts 45 configuring the first coupling-side concave-convex part 27 at the plurality of circumferential places on one axial end face of the coupling 19. The guide concave parts 36b, 36b are provided at the portions corresponding to the other axial end opening peripheral edge portions of the concave parts 47 configuring the second coupling-side concave-convex part 28 at the plurality of circumferential places on the other axial side surface of the coupling 19. The respective guide concave parts 36a, 36a are respectively provided on both axial side surfaces of the drive-side low-stiffness body 24, and the respective guide concave part 36b, 36b are respectively provided on both axial side surfaces of the driven-side low-stiffness body 25. Therefore, it is not necessary to consider the mounting directionality of the drive-side low-stiffness body 24 and the driven-side low-stiffness body 25 to the high-stiffness body 23, so that it is possible to easily assemble the coupling 19.

The preload member 20 is made of an elastic material such as rubber-like elastomer, and has a circular plate shape. An outer peripheral surface of the preload member 20 is formed at an axially central part with an engaging groove 37 over an entire circumference. Continuous parts between the outer peripheral surface and both axial side surfaces of the preload member 20 are respectively provided with chamfered portions 38, 38. Each of the chamfered portions 38, 38 is not limited to a C-chamfered portion as shown, and may also be an R-chamfered portion. The preload member 20 is internally fitted and supported to the support hole 32 formed at the radially inner side of the partition wall part 26 in a state where the inner peripheral edge portion of the partition wall part 26 of the coupling 19 is engaged to the engaging groove 37. In the meantime, when pushing the preload member 20 to the inner side of the support hole 32 from one axial side (or the other axial side) so as to mount the preload member 20 to the support hole 32, the chamfered portion 38 is guided to an inner peripheral edge portion of the support hole 32, so that a diameter of the preload member 20 can be efficiently elastically reduced. Accordingly, it is possible to easily perform the pushing operation.

One axial side half part of the drive-side concave-convex part 21 of the drive-side transmission member 17 is engaged to the first coupling-side concave-convex part 27 of the coupling 19 without a circumferential gap (without providing a circumferential gap between the circumferential side surfaces of the convex parts 42 configuring the drive-side concave-convex part 21 and the convex parts 46 configuring the first coupling-side concave-convex part 27). Also, the other axial side half part of the drive-side concave-convex part 21 is engaged to one axial side half part (part located further toward one axial side than the partition wall part 26) of the third coupling-side concave-convex part 29 of the coupling 19 with a circumferential gap being interposed therebetween (with circumferential gaps α, α being provided between the circumferential side surfaces of the convex parts 42 configuring the drive-side concave-convex part 21 and the convex parts 50 configuring the third coupling-side concave-convex part 29).

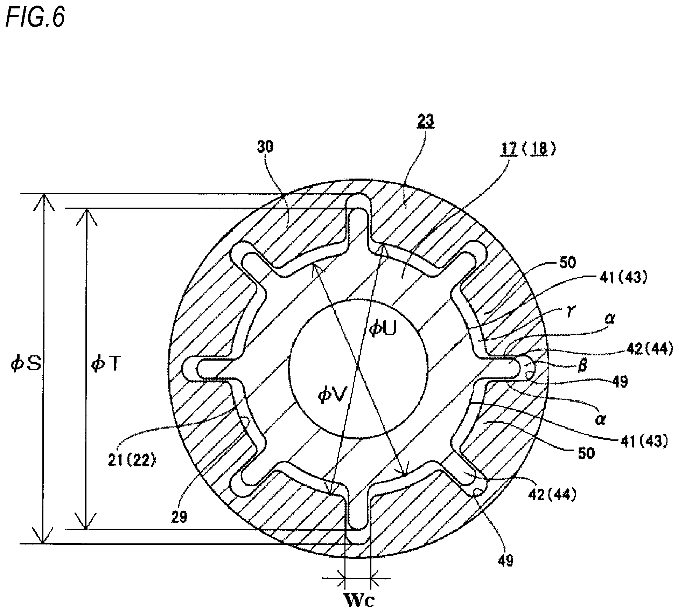

Accordingly, in an initial mounted state (a state in which torque is not transmitted), both the circumferential side surfaces of one axial side half parts of the convex parts 42 configuring the drive-side concave-convex part 21 are in contact with the circumferential side surfaces of the convex parts 46 configuring the first coupling-side concave-convex part 27 facing each other in the circumferential direction. In contrast, in the initial mounted state, both the circumferential side surfaces of the other axial side half parts of the convex parts 42 configuring the drive-side concave-convex part 21 are not in contact with the circumferential side surfaces of the convex parts 50 configuring the third coupling-side concave-convex part 29 facing each other in the circumferential direction. That is, as shown in FIG. 6, the circumferential width dimension W_{A} (refer to FIG. 7B) of the convex part 42 configuring the drive-side concave-convex part 21 is smaller than a circumferential width dimension W_{C} of the concave part 49 configuring the third coupling-side concave-convex part 29 (W_{A}<W_{C}).

Also, in this state, radial gaps are respectively interposed in the engagement parts between the drive-side concave-convex part 21 and one axial side half parts of the first coupling-side concave-convex part 27 and third coupling-side concave-convex part 29. That is, the radial gaps β, γ are respectively provided between a radially outer end face of the convex part 42 configuring the drive-side concave-convex part 21 and bottoms surfaces of the concave part 45 configuring the first coupling-side concave-convex part 27 and the concave part 49 configuring the third coupling-side concave-convex part 29 and between a bottom surface of the concave part 41 configuring the drive-side concave-convex part 21 and radially inner end faces of the convex part 46 configuring the first coupling-side concave-convex part 27 and the convex part 50 configuring the third coupling-side concave-convex part 29. In order to form the radial gaps β, γ, a distance φS between the bottom surfaces of the concave parts 49 radially facing each other is set greater than a distance φT between radially outer surfaces of the convex parts 42 radially facing each other (φS>φT), and a distance φU between the convex parts 50 radially facing each other is set greater than a distance φV between the bottom surfaces of the concave parts 41 radially facing each other (φU>φV).

Also, the other axial side half part of the driven-side concave-convex part 22 of the driven-side transmission member 18 is engaged to the second coupling-side concave-convex part 28 of the coupling 19 without a circumferential gap (without providing a circumferential gap between the circumferential side surfaces of the convex parts 44 configuring the driven-side concave-convex part 22 and the convex parts 48 configuring the second coupling-side concave-convex part 28). Also, one axial side half part of the driven-side concave-convex part 22 is engaged to the other axial side half part (part located further toward the other axial side than the partition wall part 26) of the third coupling-side concave-convex part 29 of the coupling 19 with a circumferential gap being interposed therebetween (with the circumferential gaps α, α being provided between the circumferential side surfaces of the convex parts 44 configuring the driven-side concave-convex part 22 and the convex parts 50 configuring the third coupling-side concave-convex part 29).

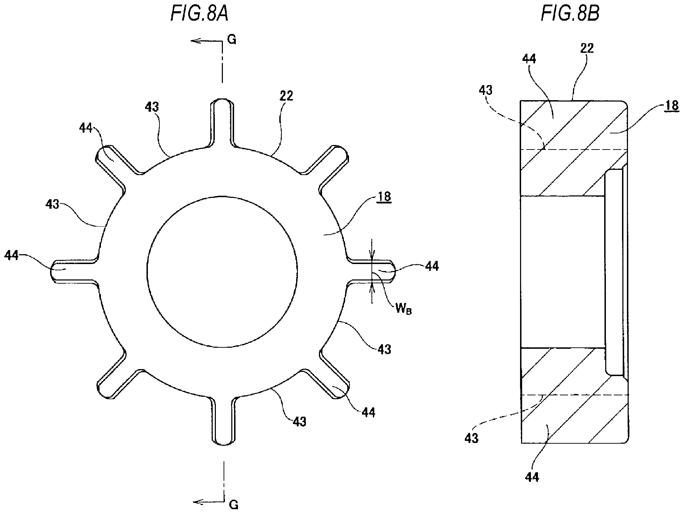

Accordingly, in the initial mounted state (a state in which torque is not transmitted), both the circumferential side surfaces of the other axial side half parts of the convex parts 44 configuring the driven-side concave-convex part 22 are in contact with the circumferential side surfaces of the convex parts 48 configuring the second coupling-side concave-convex part 28 facing each other in the circumferential direction. In contrast, in the initial mounted state, both the circumferential side surfaces of one axial side half parts of the convex parts 44 configuring the driven-side concave-convex part 22 are not in contact with the circumferential side surfaces of the convex parts 50 configuring the third coupling-side concave-convex part 29 facing each other in the circumferential direction. That is, as shown in FIG. 6, the circumferential width dimension W_{B} (refer to FIG. 8A) of the convex part 44 configuring the driven-side concave-convex part 22 is smaller than the circumferential width dimension Wc of the concave part 49 configuring the third coupling-side concave-convex part 29 (W_{B}<W_{C}).

Also, in this state, radial gaps are respectively interposed in the engagement parts between the driven-side concave-convex part 22 and the other axial side half parts of the second coupling-side concave-convex part 28 and third coupling-side concave-convex part 29. That is, the radial gaps β, γ are respectively provided between a radially outer end face of the convex part 44 configuring the driven-side concave-convex part 22 and bottoms surfaces of the concave part 47 configuring the second coupling-side concave-convex part 28 and the concave part 49 configuring the third coupling-side concave-convex part 29 and between a bottom surface of the concave part 43 configuring the driven-side concave-convex part 22 and radially inner end faces of the convex part 48 configuring the second coupling-side concave-convex part 28 and the convex part 50 configuring the third coupling-side concave-convex part 29. In order to form the radial gaps β, γ, the distance φS between the bottom surfaces of the concave parts 49 radially facing each other is set greater than the distance φT between the radially outer surfaces of the convex parts 42 radially facing each other (φS>φT), and the distance φU between the convex parts 50 radially facing each other is set greater than the distance φV between the bottom surfaces of the concave parts 43 radially facing each other (φU>φV).

Also, in this state, the partition wall part 26 of the coupling 19 is disposed between the other axial end face of the drive-side transmission member 17 and one axial end face of the driven-side transmission member 18, which face each other in the axial direction. Also, the preload member 20 is elastically compressed and clamped between the leading end face of the output shaft 12a of the electric motor 7 and the base end face of the worm shaft 6a, which face each other in the axial direction. Thereby, the worm shaft 6a is urged toward the other axial side on the basis of the elastic force of the preload member 20, so that an axial preload is applied to the rolling bearing 9b configured to rotatably support the worm shaft 6a to the housing 3. On the other hand, the preload member 20 may be elastically compressed and clamped between an end face of the driven-side transmission member 18 and an end face of the drive-side transmission member 17.

According to the torque-transmission joint and the electric power steering device of the first example configured as described above, it is possible to suppress an abnormal sound from being generated when reversing a rotating direction of the output shaft 12a of the electric motor 7.

That is, when the torque that is to be transmitted between the output shaft 12a of the electric motor 7 and the worm shaft 6a is small and an amount of circumferential elastic compression of each of the clamped pieces 35a, 35b configuring the drive-side low-stiffness body 24 and the driven-side low-stiffness body 25 is small, the circumferential side surfaces of the convex parts 42 configuring the drive-side concave-convex part 21 and the convex parts 44 configuring the driven-side concave-convex part 22 are not in contact with the circumferential side surfaces of the convex parts 50 configuring the third coupling-side concave-convex part 29 (the circumferential gap α does not disappear). Accordingly, it is possible to suppress the abnormal sound even when reversing the rotating direction of the output shaft 12a of the electric motor 7. Meanwhile, in this state, the torque is transmitted from the drive-side transmission member 17 to the coupling 19 via the engagement part between the drive-side concave-convex part 21 and the first coupling-side concave-convex part 27, and the torque transmitted to the coupling 19 is transmitted to the driven-side transmission member 18 via the engagement part between the second coupling-side concave-convex part 28 and the driven-side concave-convex part 22.

Also, when the torque that is to be transmitted between the output shaft 12a of the electric motor 7 and the worm shaft 6a is large, the amount of circumferential elastic compression of each of the clamped pieces 35a, 35b configuring the drive-side low-stiffness body 24 and the driven-side low-stiffness body 25 increases and the circumferential side surfaces of the convex parts 42 configuring the drive-side concave-convex part 21 and the convex parts 44 configuring the driven-side concave-convex part 22 are in contact with the circumferential side surfaces of the convex parts 50 configuring the third coupling-side concave-convex part 29 (the circumferential gap α disappears). Since the force of the contact is lowered in association with the circumferential elastic compressive deformation of each of the clamped pieces 35a, 35b, it is possible to suppress the abnormal sound accompanied by the contact. Accordingly, even though the torque increases when reversing the rotating direction of the output shaft 12a of the electric motor 7, it is possible to suppress the abnormal sound. Meanwhile, in this state, most of the torque is transmitted from the drive-side transmission member 17 to the coupling 19 via the engagement part between the drive-side concave-convex part 21 and one axial side half part of the third coupling-side concave-convex part 29, and most of the torque transmitted to the coupling 19 is transmitted to the driven-side transmission member 18 via the engagement part between the other axial side half part of the third coupling-side concave-convex part 29 and the driven-side concave-convex part 22 (the remaining torque is transmitted from the drive-side transmission member 17 to the driven-side transmission member 18, like the above case where the torque is small).

As described above, in the first example, it is possible to divide the torque transmission characteristic between the output shaft 12a of the electric motor 7 and the worm shaft 6a into two stages, in accordance with the magnitude of the torque to be transmitted.

In the meantime, in case of implementing the present invention, when the circumferential gap between the drive-side concave-convex part 21 and one axial side half part of the third coupling-side concave-convex part 29 and the circumferential gap between the driven-side concave-convex part 22 and the other axial side half part of the third coupling-side concave-convex part 29 are made to be different from each other or the circumferential gaps are respectively provided between the drive-side concave-convex part 21 and the first coupling-side concave-convex part 27 and between the driven-side concave-convex part 22 and the second coupling-side concave-convex part 28, it is possible to more divide the torque transmission characteristic between the output shaft 12a and the worm shaft 6a than the two stages.

Also, the radial gaps β, γ are respectively interposed in the engagement parts between the drive-side concave-convex part 21 and one axial side half parts of the first coupling-side concave-convex part 27 and the third coupling-side concave-convex part 29. For this reason, it is possible to naturally permit inclination of central axes of the drive-side transmission member 17 and the coupling 19, based on the radial gaps β, γ.

Also, in the first example, the radial gaps β, γ are respectively interposed in the engagement parts between the driven-side concave-convex part 22 and the other axial side half parts of the second coupling-side concave-convex part 28 and the third coupling-side concave-convex part 29. For this reason, it is possible to naturally permit inclination of central axes of the driven-side transmission member 18 and the coupling 19, based on the radial gaps β, γ.

Accordingly, in the first example, even when misalignment (axis misalignment or eccentricity of the output shaft 12a of the electric motor 7, and axis misalignment, inclination or eccentricity of the worm shaft 6a) occurs, the central axis of the coupling 19 is naturally inclined relative to the central axes of the drive-side transmission member 17 and the driven-side transmission member 18, so that it is possible to smoothly transmit the torque.

Also, as shown in FIG. 4, the other axial side surface of the drive-side transmission member 17 is located further toward the other axial side than the other axial side surface of the coupling 19 by an axial dimension δ_{A}, and one axial side surface of the driven-side transmission member 18 is located further toward one axial side than one axial side surface of the coupling 19 by an axial dimension δ_{B}. For this reason, gaps of the axial dimensions δ_{A}, δ_{B} exist between both axial end faces of the coupling 19 and the electric motor 7 and rolling bearing 9b, respectively. Accordingly, in the first example, by the gaps, it is possible to prevent a problem that when the central axes of the drive-side transmission member 17 and driven-side transmission member 18 and the coupling 19 are inclined relative to each other, both axial end faces of the coupling 19 interfere with the electric motor 7 and the rolling bearing 9b and the inclinations are thus obstructed. When the coupling 19 is inclined relative to the drive-side transmission member 17 and the driven-side transmission member 18, the inclination is absorbed by the drive-side low-stiffness body 24 and the driven-side low-stiffness body 25. Accordingly, it is possible to easily incline the coupling 19.

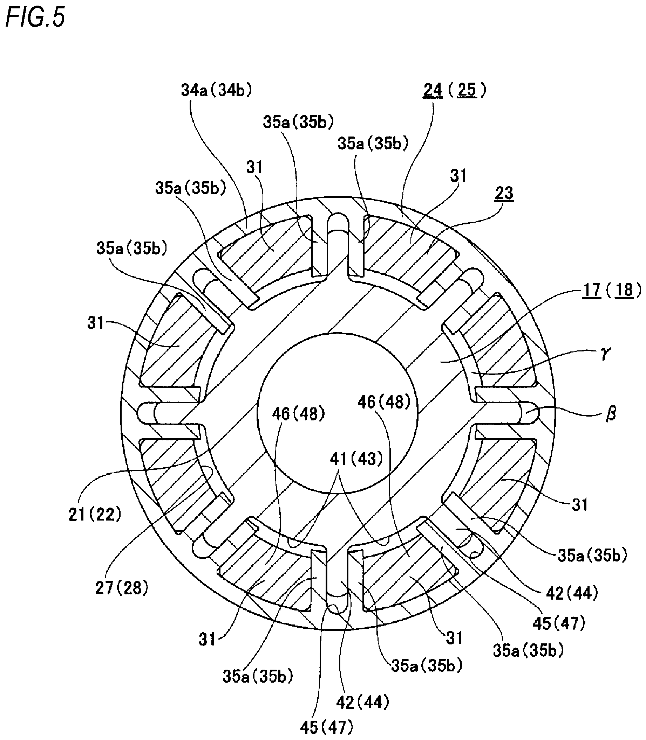

Also, as shown in FIG. 5, the radially inner end portion of each of the clamped pieces 35a, 35a (35b, 35b) configuring the drive-side low-stiffness body 24 (the driven-side low-stiffness body 25) is arranged at the more radially inner side than the radially inner end portion of each of the core parts 31, 31 configuring the high-stiffness body 23. For this reason, by the respective radial gaps β, γ, when the central axes of the drive-side transmission member 17 (the driven-side transmission member 18) and the coupling 19 are inclined relative to each other, the radially inner end portion of each of the clamped pieces 35a, 35a (35b, 35b) can be contacted to the outer peripheral surface of the drive-side transmission member 17 (the driven-side transmission member 18) before the radially inner end portion of each of the core parts 31, 31 is contacted to the outer peripheral surface of the drive-side transmission member 17 (the driven-side transmission member 18). Thereby, the force by which the radially inner end portion of each of the core parts 31, 31 is contacted to the outer peripheral surface of the drive-side transmission member 17 (the driven-side transmission member 18) is lowered, so that it is possible to suppress the abnormal sound.

Also, the partition wall part 26 of the coupling 19 is arranged between the other axial end face of the drive-side transmission member 17 and one axial end face of the driven-side transmission member 18, which face each other in the axial direction. Also, the preload member 20 is elastically compressed and clamped between the leading end face of the output shaft 12a of the electric motor 7 and the base end face of the worm shaft 6a, which face each other in the axial direction. For this reason, it is possible to restrain the axial position of the coupling 19 with respect to the drive-side transmission member 17 and the driven-side transmission member 18 by the partition wall part 26 and the preload member 20. Therefore, in the first example, it is not necessary to separately provide the outer peripheral surfaces of the drive-side transmission member 17 and the driven-side transmission member 18 with collar parts facing both axial end faces of the coupling 19 so as to restrain the axial position of the coupling 19. Accordingly, it is possible to shorten the axial dimensions of the drive-side transmission member 17 and the driven-side transmission member 18, thereby implementing axial miniaturization. In the meantime, when implementing the present invention, the preload member 20 may be arranged with an axial gap being interposed between the leading end face of the output shaft 12a of the electric motor 7 and the base end face of the worm shaft 6a.

Also, at least in the initial mounted state, the partition wall part 26 is not in contact with the drive-side transmission member 17, the driven-side transmission member 18, the output shaft 12a of the electric motor 7 and the worm shaft 6a. Therefore, even though the partition wall part is contacted to the members 17, 18, 12a, 6a upon occurrence of the misalignment, the force of the contact is lowered as the preload member 20 is elastically deformed. Accordingly, it is possible to suppress the abnormal sound accompanied by the contact.

Also, based on the elastic force of the preload member 20, the worm shaft 6a is urged toward the other axial side, so that the axial preload is applied to the rolling bearing 9b configured to rotatably support the worm shaft 6a to the housing 3. Accordingly, it is possible to suppress the abnormal sound associated with the rattling of the rolling bearing 9b.

Also, the guide concave parts 36a, 36a are provided at the portions corresponding to one axial end opening peripheral edge portions of the concave parts configuring the first coupling-side concave-convex part 27 at the plurality of circumferential places on one axial side face of the coupling 19, and the guide concave parts 36b, 36b are provided at the portions corresponding to the other axial end opening peripheral edge portions of the concave parts configuring the second coupling-side concave-convex part 28 at the plurality of circumferential places on the other axial side surface of the coupling 19. Therefore, when performing the assembling, it is possible to easily perform an operation of inserting the convex parts configuring the drive-side concave-convex part 21 into the inner sides of the concave parts configuring the first coupling-side concave-convex part 27 from one axial end openings of the respective concave parts by using the respective guide concave parts 36a, 36a as guide parts. Also, likewise, it is possible to easily perform an operation of inserting the convex parts configuring the driven-side concave-convex part 22 into the inner sides of the concave parts configuring the second coupling-side concave-convex part 28 from the other axial end openings of the respective concave parts by using the respective guide concave parts 36b, 36b as guide parts.

Also, both axial end faces of the drive-side low-stiffness body 24 are provided with the respective guide concave parts 36a, 36a (axial depth dimensions of the respective guide concave parts 36a, 36a), so that a range of the engagement part (contact part) between the drive-side concave-convex part 21 and the first coupling-side concave-convex part 27 is narrowed as much as the dimensions. Specifically, a contact area between each of the concave parts 45 configuring the first coupling-side concave-convex part 27 and each of the convex parts 42 configuring the drive-side concave-convex part 21 is reduced. For this reason, when the misalignment occurs (when the torque transmission (rotation) is performed with the central axes of the drive-side transmission member 17 and the coupling 19 being inclined relative to each other), it is possible to suppress a resistance force (frictional force to be applied between the concave part 45 and the convex part 42) against the rotation occurring at the engagement part. Also, since the respective guide concave parts 36a, 36a are provided, the inclination of the central axes of the drive-side transmission member 17 and the coupling 19 is likely to be absorbed. In the meantime, a circumferential dimension W₄₅ (refer to FIG. 12) of the concave part 45 of the first coupling-side concave-convex part 27 is preferably equal to or larger than the circumferential width dimension W_{A} (refer to FIG. 7B) of the convex part 42 of the drive-side concave-convex part 21 (W₄₅≥W_{A}).

Also, both axial end faces of the driven-side low-stiffness body 25 are provided with the respective guide concave parts 36b, 36b (axial depth dimensions of the respective guide concave parts 36b, 36b), so that a range of the engagement part (contact part) between the driven-side concave-convex part 22 and the second coupling-side concave-convex part 28 is narrowed as much as the dimensions. Specifically, a contact area between each of the concave parts 47 configuring the second coupling-side concave-convex part 28 and each of the convex parts 44 configuring the driven-side concave-convex part 22 is reduced. For this reason, when the misalignment occurs (when the torque transmission (rotation) is performed with the central axes of the driven-side transmission member 18 and the coupling 19 being inclined relative to each other), it is possible to suppress a resistance force (frictional force to be applied between the concave part 47 and the convex part 44) against the rotation occurring at the engagement part. Also, since the respective guide concave parts 36b, 36b are provided, the inclination of the central axes of the driven-side transmission member 18 and the coupling 19 is likely to be absorbed. In the meantime, a circumferential dimension W₄₇ (refer to FIG. 12) of the concave part 47 of the second coupling-side concave-convex part 28 is preferably equal to or larger than the circumferential width dimension W_{B} (refer to FIG. 8A) of the convex part 44 of the driven-side concave-convex part 22 (W₄₇≥W_{B}).

Also, the parts, which are located at both axial sides with the partition wall part 26 being interposed therebetween, of the respective concave parts 49, 49 configuring the third coupling-side concave-convex part 29 are formed to be connected with each other through the respective through-holes 33, 33 formed at the plurality of circumferential places on the radially outer half part of the partition wall part 26. Also, the diameter d_{A} of the inscribed circle of the respective through-holes 33, 33 is smaller than the diameter d_{B} of the inscribed circle of the convex parts configuring the third coupling-side concave-convex part 29 (d_{A}<d_{B}). By adopting this configuration, when the high torque is transmitted, the excessive stress is suppressed from being applied to the inner peripheral surface of the main part 30 of the high-stiffness body 23, so that the durability of the high-stiffness body 23 is improved.

Also, a distance φF between the bottom surfaces of the concave parts 45 radially facing each other (a distance φF between the bottom surfaces of the concave parts 47 radially facing each other) (refer to FIG. 12) is smaller than the distance φS between the bottom surfaces of the concave parts 49 radially facing each other (refer to FIG. 6) (φF<φS). Thereby, even when the misalignment occurs between the output shaft 12a of the electric motor 7, which is a drive shaft, and the worm shaft 6a, which is a driven shaft, the drive-side low-stiffness body 24 and the driven-side low-stiffness body 25 are contacted to the convex parts 42 configuring the drive-side concave-convex part 21 and the convex parts 44 configuring the driven-side concave-convex part 22.

Also, a distance dx (refer to FIG. 12) between the respective clamped pieces 35a, 35b radially facing each other is smaller than the diameter d_{B} (refer to FIG. 10) of the inscribed circle of the convex parts configuring the third coupling-side concave-convex part 29 (d_{X}<d_{B}). Thereby, even when the misalignment occurs between the output shaft 12a of the electric motor 7, which is a drive shaft, and the worm shaft 6a, which is a driven shaft, the drive-side low-stiffness body 24 and the driven-side low-stiffness body 25 are contacted to the concave parts 41 configuring the drive-side concave-convex part 21.

In the meantime, when implementing the present invention, the circumferential width dimension W_{A} (W_{B}) of the convex part 42 (44) configuring the drive-side concave-convex part 21 (the driven-side concave-convex part 22) may be changed in the axial direction, as shown in FIGS. 9B and 9C, for example. Specifically, as shown in FIG. 9B, the width dimension W_{A}(W_{B}) of the convex part 42 (44) may be decreased toward the partition wall part 26 in the axial direction (the left in FIG. 9B) or, as shown in FIG. 9C, the width dimension W_{A} (W_{B}) of the convex part 42 (44) may be decreased from an axially intermediate part toward both end edge portions. When the configuration as shown in FIGS. 9B and 9C are adopted, the range of the engagement part (contact part) between the drive-side concave-convex part 21 and one axial side half parts of the first coupling-side concave-convex part 27 and third coupling-side concave-convex part 29 (the range of the engagement part (contact part) between the driven-side concave-convex part 22 and the other axial side half parts of the second coupling-side concave-convex part 28 and third coupling-side concave-convex part 29) is narrowed. Accordingly, when the misalignment occurs, it is possible to suppress the resistance force against the rotation occurring at the engagement part. Also, when the misalignment occurs, it is possible to efficiently prevent the drive-side concave-convex part 21 (the driven-side concave-convex part 22) and one axial side half parts of the first coupling-side concave-convex part 27 and third coupling-side concave-convex part 29 (the other axial side half parts of the second coupling-side concave-convex part 28 and third coupling-side concave-convex part 29) from partially colliding with each other.

### [Second Example of Embodiment]

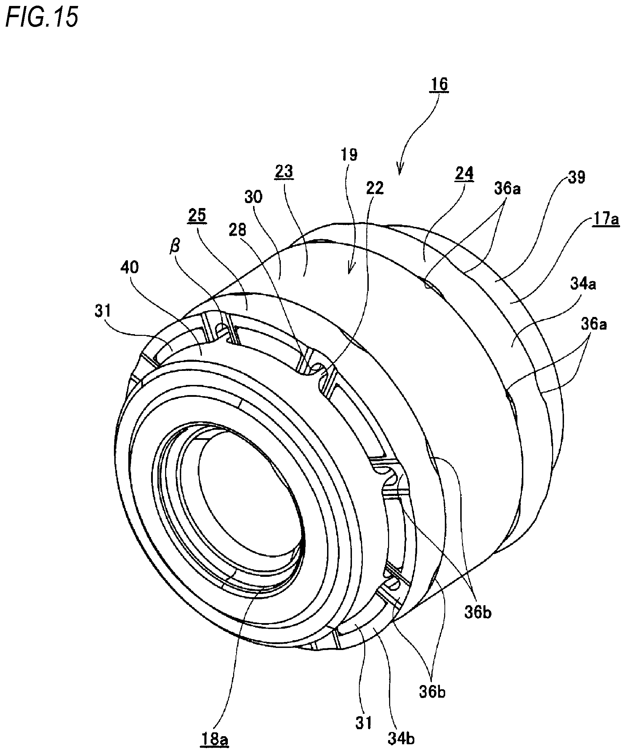

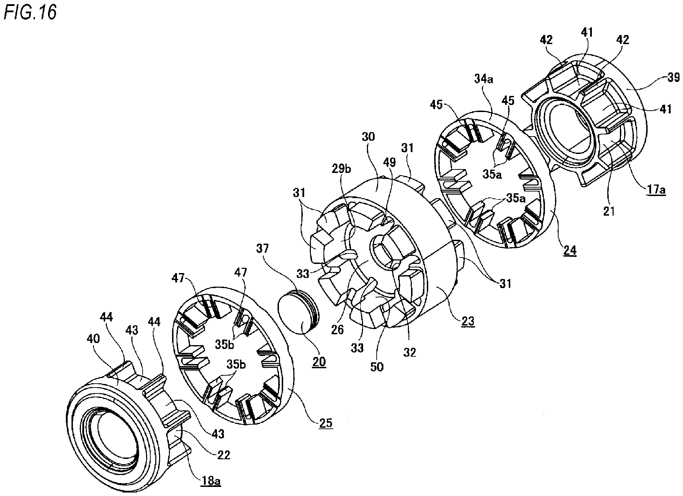

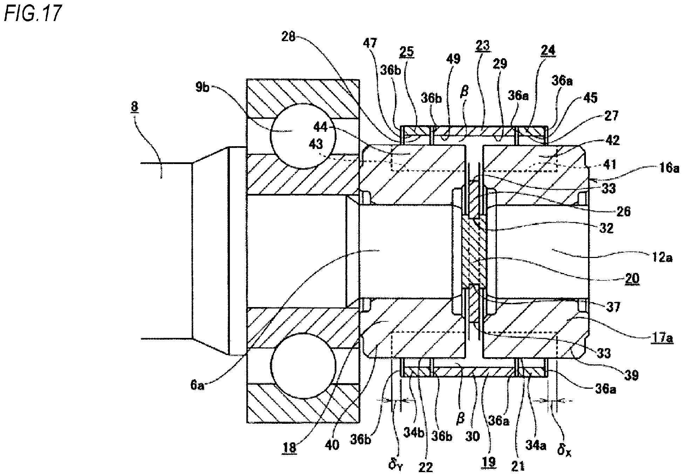

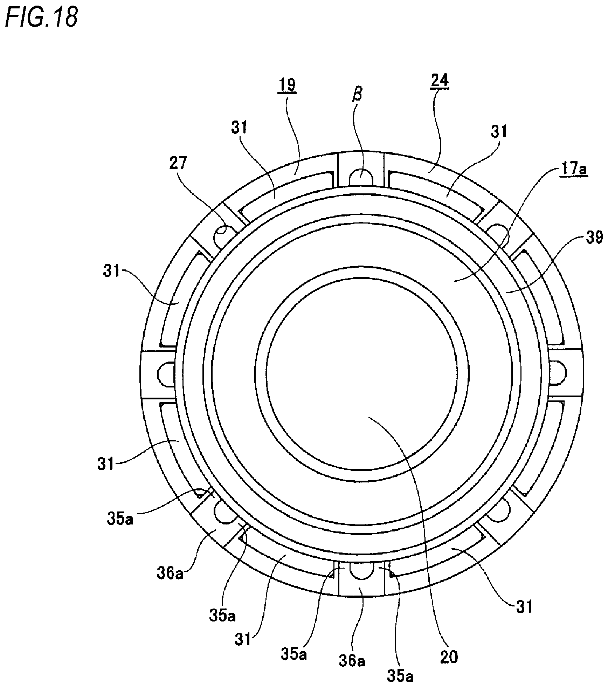

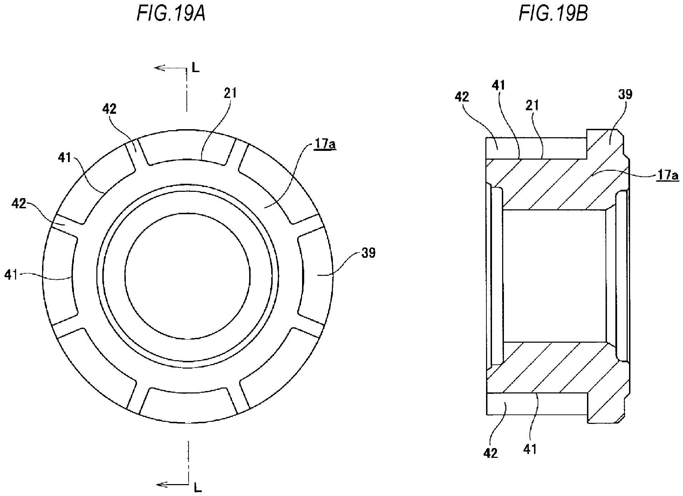

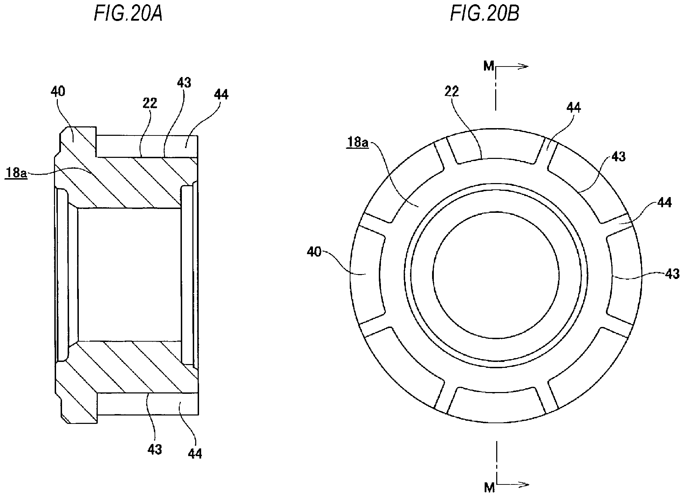

A second example of the embodiment of the present invention is described with reference to FIGS. 15 to 20.

In a torque-transmission joint 16a of the second example, an outer peripheral surface of one axial end portion of a drive-side transmission member 17a is provided over an entire circumference with a drive-side collar part 39, so that one axial side openings of the concave parts 41 configuring the drive-side concave-convex part 21 are blocked. Also, an outer peripheral surface of the other axial end portion of a driven-side transmission member 18a is provided over an entire circumference with a driven-side collar part 40, so that the other axial side openings of the concave parts 43 configuring the driven-side concave-convex part 22 are blocked. The other axial side surface of the drive-side collar part 39 and one axial side surface of the driven-side collar part 40 are respectively brought close to one axial side surface of the coupling 19 and the other axial side surface of the coupling 19 with gaps of axial dimensions δ_{X}, δ_{Y} being interposed. Thereby, it is possible to restrain the axial position of the coupling 19 relative to the drive-side transmission member 17a and the driven-side transmission member 18a by the drive-side collar part 39 and the driven-side collar part 40, too.

In the second example, the gaps of the axial dimensions δ_{X}, δ_{Y} are provided. Accordingly, it is possible to prevent a problem that when the central axes of the drive-side transmission member 17a and driven-side transmission member 18a and the coupling 19 are inclined relative to each other, both axial end faces of the coupling 19 interfere with the drive-side collar part 39 and the driven-side collar part 40 and the inclination is thus obstructed.

The other configurations and operations are similar to the first example of the embodiment.

### [Third Example of Embodiment]

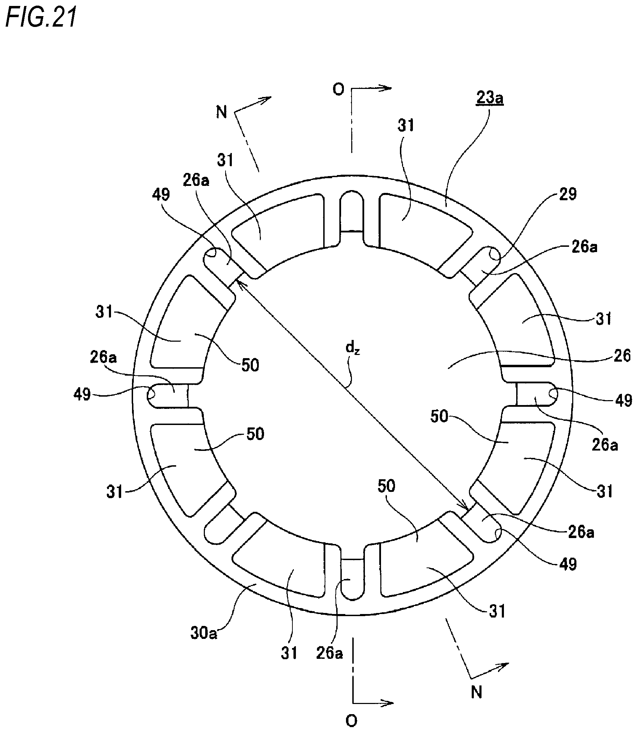

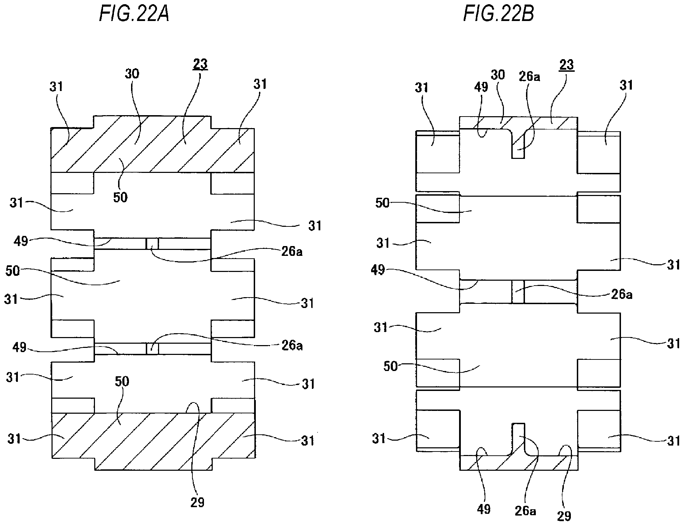

A third example of the embodiment of the present invention is described with reference to FIGS. 21 and 22.

In the third example, a structure of a high-stiffness body 23a configuring the coupling is different from the first and second examples of the embodiment. Also, in the third example, the preload member is omitted.

That is, in the third example, partition wall parts 26a, 26a are provided (with being circumferentially spaced) only at the inner sides of the concave parts 49, 49, which configure the third coupling-side concave-convex part 29, of the axially central portion of the third coupling-side concave-convex part 29 provided on an inner peripheral surface of a main part 30a configuring the high-stiffness body 23a. A diameter d_{z} of an inscribed circle of the respective partition wall parts 26a, 26a is smaller than a diameter of a circumscribed circle of the convex parts 42, 42 (44, 44) (for example, refer to FIGS. 5 to 8 and FIGS. 18 and 19) configuring the drive-side concave-convex part 21 (the driven-side concave-convex part 22). In an assembled state of the torque-transmission joint of the third example, at least a radially inner end portion of each of the partition wall parts 26a, 26a is arranged without an axial gap (are axially clamped) or with an axial gap between the other axial end face of the drive-side transmission member 17 (each of the convex parts 42, 42) and one axial end face of the driven-side transmission member 18 (each of the convex parts 44, 44), which face each other in the axial direction (for example, refer to FIGS. 4, 7 and 8, and FIGS. 17, 19 and 20). Thereby, the respective partition wall parts 26a, 26a are provided, so that it is possible to restrain the axial position of the coupling relative to the drive-side transmission member 17 and the driven-side transmission member 18.

The other configurations and operations are similar to the first and second examples of the embodiment.

The subject application is based on Japanese Patent Application No. 2016-044360 filed on March 8, 2016, the contents of which are incorporated herein by reference.

### Industrial Applicability

When implementing the present invention, if the preload member is omitted, the support hole of the radially inner side of the partition wall part configuring the coupling may be omitted to configure the partition wall part into a simple flat plate shape (circular plate shape). Also, in this case, the partition wall part may be arranged without an axial gap (are axially clamped) or with an axial gap between the axial end faces of the drive-side transmission member and the driven-side transmission member, which face each other in the axial direction.

### Description of Reference Numerals

1: steering wheel
2: steering shaft
3: housing
4: worm wheel
5: worm teeth
6, 6a: worm shaft
7: electric motor
8: worm
9a, 9b: rolling bearing
10: pressing piece
11: coil spring
12, 12a: output shaft
13: spline hole
14: spline shaft part
15: preload applying mechanism
16, 16a: torque-transmission joint
17, 17a: drive-side transmission member
18, 18a: driven-side transmission member
19: coupling
20: preload member
21: drive-side concave-convex part
22: driven-side concave-convex part
23, 23a: high-stiffness body
24: drive-side low-stiffness body
25: driven-side low-stiffness body
26: partition wall part
27: first coupling-side concave-convex part
28: second coupling-side concave-convex part
29: third coupling-side concave-convex part
30, 30a: main part
31: core part
32: support hole
33: through-hole
34a, 34b: coupling cylinder part
35a, 35b: clamped piece
36a, 36b: guide concave part
37: engaging groove
38: chamfered portion
39: drive-side collar part
40: driven-side collar part
41: concave part
42: convex part
43: concave part
44: convex part
45: concave part
46: convex part
47: concave part
48: convex part
49: concave part
50: convex part

## Claims

1. A torque-transmission joint configured to transmit torque between end portions of a drive shaft and a driven shaft disposed in series in an axial direction, the torque-transmission joint comprising:
a drive-side transmission member which is supported to an end portion of the drive shaft and which has a drive-side concave-convex part configured by concave parts and convex parts arranged on an outer peripheral surface;
a driven-side transmission member which is supported to an end portion of the driven shaft and which has a driven-side concave-convex part configured by concave parts and convex parts arranged on an outer peripheral surface; and
a coupling which is configured by combining a high-stiffness body and a low-stiffness body having stiffness lower than the high-stiffness body, the coupling which has a first coupling-side concave-convex part configured by concave parts and convex parts arranged at one axial end portion of an inner peripheral surface, a second coupling-side concave-convex part configured by concave parts and convex parts arranged at the other axial end portion of the inner peripheral surface, a third coupling-side concave-convex part configured by concave parts and convex parts arranged at an axially intermediate part of the inner peripheral surface, and a partition wall part joined to an axially intermediate portion of the third coupling-side concave-convex part, wherein at least the third coupling-side concave-convex part is formed at the high-stiffness body and concave parts configuring the first coupling-side concave-convex part and the second coupling-side concave-convex part are formed at the low-stiffness body,
wherein the drive-side concave-convex part is engaged to the first coupling-side concave-convex part, and the drive-side concave-convex part is engaged to a part, which is located further toward one axial side than the partition wall part, of the third coupling-side concave-convex part in a state where a circumferential gap, which is greater than a circumferential gap provided to an engagement part between the drive-side concave-convex part and the first coupling-side concave-convex part, is interposed therebetween,
wherein the driven-side concave-convex part is engaged to the second coupling-side concave-convex part, and the driven-side concave-convex part is engaged to a part, which is located further toward the other axial side than the partition wall part, of the third coupling-side concave-convex part in a state where a circumferential gap, which is greater than a circumferential gap provided to an engagement part between the driven-side concave-convex part and the second coupling-side concave-convex part, is interposed therebetween; and
wherein at least a part of the partition wall part is arranged between axial end faces of the drive-side transmission member and the driven-side transmission member.

2. The torque-transmission joint according to claim 1,
wherein the high-stiffness body has:
a main part which has the third coupling-side concave-convex part and the partition wall part on an inner peripheral surface thereof; and
a pair of sub-parts provided at positions at which the main part is sandwiched from both axial sides,
wherein the low-stiffness body has:
a drive-side low-stiffness body; and
a driven-side low-stiffness body,
wherein the drive-side low-stiffness body has the concave parts configuring the first coupling-side concave-convex part at a plurality of circumferential places on an inner peripheral surface thereof, and the drive-side low-stiffness body is joined to the sub-part of one axial side of the pair of sub-parts, and
wherein the driven-side low-stiffness body has the concave parts configuring the second coupling-side concave-convex part at a plurality of circumferential places on an inner peripheral surface thereof, and the driven-side low-stiffness body is joined to the sub-part of the other axial side of the pair of sub-parts.

3. The torque-transmission joint according to claim 1 or 2,
wherein a radially inner side of the partition wall part is formed with a support hole, and
wherein a preload member which is made of an elastic material and which is configured to apply an axial preload to the driven shaft in a use state is internally fitted and supported to the support hole.

4. The torque-transmission joint according to any one of claims 1 to 3,
wherein a radial gap is interposed in at least one engagement part of:
an engagement part between the drive-side concave-convex part and a part, which is located further toward one axial side than the partition wall part, of the first coupling-side concave-convex part and the third coupling-side concave-convex part; and
an engagement part between the driven-side concave-convex part and a part, which is located further toward the other axial side than the partition wall part, of the second coupling-side concave-convex part and the third coupling-side concave-convex part.

5. The torque-transmission joint according to any one of claims 1 to 4,
wherein the partition wall part is formed to extend radially inward from the axially intermediate part of the inner peripheral surface of the third coupling-side concave-convex part,
wherein parts, which are located at both axial sides with the partition wall part being interposed therebetween, of concave parts configuring the third coupling-side concave-convex part are formed to be connected with each other by through-holes formed at a plurality of circumferential places on the partition wall part, and
wherein a diameter of an inscribed circle of the respective through-holes is smaller than a diameter of an inscribed circle of the convex parts configuring the third coupling-side concave-convex part.

6. The torque-transmission joint according to any one of claims 1 to 5,
wherein guide concave parts which are concave in the axial direction are provided at at least one portions of:
portions corresponding to one axial end opening peripheral edge portions of the concave parts configuring the first coupling-side concave-convex part at a plurality of circumferential places on one axial side surface of the coupling; and
portions corresponding to the other axial end opening peripheral edge portions of the concave parts configuring the second coupling-side concave-convex part at a plurality of circumferential places on the other axial side surface of the coupling.

7. The torque-transmission joint according to any one of claims 1 to 6,
wherein a circumferential width dimension of the convex part configuring at least one of the drive-side concave-convex part and the driven-side concave-convex part varies in the axial direction.

8. The torque-transmission joint according to claim 7,
wherein the circumferential width dimension of the convex part decreases toward the partition wall part with respect to the axial direction.

9. The torque-transmission joint according to claim 7,
wherein the circumferential width dimension of the convex part decreases from an axially intermediate part toward both end edge portions.

10. An electric power steering device comprising:
a housing;
a rotary shaft which is rotatably supported to the housing;
a worm wheel which is coaxially supported to the rotary shaft and which is configured to rotate together with the rotary shaft;
a worm which has worm teeth provided on an axially intermediate part of a worm shaft, wherein both axial end portions of the worm shaft are rotatably supported to the housing by bearings with the worm teeth being meshed with the worm wheel; and
an electric motor which is configured to rotatively drive the worm,
wherein an output shaft of the electric motor which is a drive shaft and the worm shaft which is a driven shaft are connected to each other by a torque-transmission joint so that torque can be transmitted, and
wherein the torque-transmission joint is the torque-transmission joint according to any one of claims 1 to 9.
